(19) Europäisches Patentamt
European Patent Office
Office européen des brevets

(11) **EP 1 998 945 B1**

(12) **FASCICULE DE BREVET EUROPEEN**

(45) Date de publication et mention
de la délivrance du brevet:
**13.01.2010 Bulletin 2010/02**

(51) Int Cl.:
***B29B 11/08*** *(2006.01)*    ***B29B 11/14*** *(2006.01)*
***B29C 49/06*** *(2006.01)*    ***B29C 45/37*** *(2006.01)*
***B29C 33/42*** *(2006.01)*

(21) Numéro de dépôt: **07726720.1**

(22) Date de dépôt: **08.03.2007**

(86) Numéro de dépôt international:
**PCT/EP2007/052195**

(87) Numéro de publication internationale:
**WO 2007/101879 (13.09.2007 Gazette 2007/37)**

(54) **DISPOSITIF D'INJECTION ET PROCÉDÉ POUR LA FABRICATION D'UNE PIÈCE À PAROI MINCE, NOYAU ET PRÉFORME**

SPRITZVORRICHTUNG UND ENTSPRECHENDES VERFAHREN ZUR HERSTELLUNG EINER DÜNNEN WANDKOMPONENTE, KERN UND VORFORMLING

INJECTING DEVICE AND CORRESPONDING METHOD FOR MAKING A THIN WALL COMPONENT, CORE AND PREFORM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.03.2006 FR 0650807**

(43) Date de publication de la demande:
**10.12.2008 Bulletin 2008/50**

(73) Titulaire: **Sa Des Eaux Minerales d'Evian Saeme
74500 Evian-Les-Bains (FR)**

(72) Inventeurs:
• **BERTHEOL, Gilles
  F-74500 Publier (FR)**
• **COLLOUD, Alain
  F-74200 Reyvroz (FR)**
• **BESSON, Jean-Paul
  F-74360 Abondance (FR)**

(74) Mandataire: **Cabinet Plasseraud
52, rue de la Victoire
75440 Paris Cedex 09 (FR)**

(56) Documents cités:
**EP-A1- 1 180 424    GB-A- 2 047 606
JP-A- 11 090 975    JP-A- 2002 292 723
US-A- 4 649 068**

**Description**

**DOMAINE TECHNIQUE DE LA PRESENTE INVENTION**

La présente invention a pour objet l'injection de pièces à parois minces, notamment des préformes.

La technique d'injection/soufflage (ISBM : Injection Stretch Blow Molding) est bien connue et employée pour la réalisation de pièces à partir de matériaux thermoplastiques. Ces pièces peuvent prendre la forme de récipients alimentaires tels que des bouteilles.

La technique d'injection/soufflage comprend tout d'abord l'injection constituée des étapes suivantes : séchage du matériau utilisé si nécessaire avant sa fusion, plastification, injection du matériau dans le moule comprenant un noyau et un contre moule formant une cavité de moulage qui correspond à l'empreinte de moulage, refroidissement, démoulage et évacuation des préformes, puis le soufflage comportant les étapes suivantes : réchauffage des préformes, étirage - présoufflage et soufflage.

On s'intéresse plus spécialement à l'injection dans le cadre de l'invention.

**ETAT DE LA TECHNIQUE ANTERIEURE**

Il est connu que la fabrication de pièces à parois minces par injection est difficile à réaliser. En effet, une telle fabrication passe par l'injection/moulage de préformes à parois minces elles aussi. Cette opération d'injection/moulage pose un certain nombre de problèmes techniques. En particulier, au cours de l'écoulement du matériau thermoplastique fondu dans la cavité de moulage, la perte de charge et le refroidissement du matériau au contact du moule nécessitent des pressions d'injection d'autant plus élevées que les parois sont minces. Ces pressions deviennent trop fortes et vont au-delà des possibilités techniques des matériaux utilisés dans le cas de parois minces.

La notion de paroi "mince" est fonction de la forme de la pièce et du matériau utilisé. Par exemple dans le cas d'une préforme de bouteille et dans des conditions de moulage classiques, l'épaisseur de la préforme est limitée par l'apparition de manque de matière (moulage incomplet) dans la zone opposée au point d'injection de la matière fondue dans le moule.

Ceci est vrai pour tous les matériaux thermoplastiques, avec des limites d'épaisseur variables en fonction de la viscosité à l'état fondu du matériau et de la forme de la pièce.

Dans le cas d'une préforme en polyéthylène téréphtalate (PET) par exemple, il est difficile de descendre sous une épaisseur de 2,5 mm pour une longueur de 120 mm environ.

La demande de brevet WO-A-97/13696 décrit ainsi une méthode et un appareil pour réaliser des préformes multicouches par injection-soufflage. La demande de brevet souligne la difficulté d'obtenir des préformes à parois minces en utilisant des moules d'injection conventionnels. En effet, lors de l'utilisation de tels moules, la matière fondue rencontre une résistance à l'écoulement relativement forte et nécessite l'utilisation de pressions d'injection fortes dans la cavité du moule. Afin de remédier à ces inconvénients, des cannelures ont été insérées dans la cavité du moule correspondant à la surface interne du contre moule. Ces cannelures sont réparties de façon équiangulaire dans la cavité et elles s'étendent du point d'injection à l'extrémité opposée du moule.

On connaît également la demande de brevet japonais JP 11-090975 qui décrit une préforme multicouches, un procédé de fabrication d'une telle préforme et un récipient multicouches obtenu à partir d'une telle préforme.

La préforme comprend une première couche en polyester injecté dans un moule pour former la couche intérieure. Du polyester recyclé est ensuite injecté pour former la couche extérieure de la préforme. Il est prévu des nervures sur la première couche, afin de pouvoir réaliser des préformes multicouches de fines épaisseurs. Toutefois, ces nervures sont prévues sur toute la hauteur de la préforme, entre le fond et la bague de la préforme.

De même, le noyau comprend des zones de dépression à sa surface réalisées sur la zone correspondant à toute la hauteur de la préforme. Cette configuration est adaptée aux préformes multicouches. De plus, les nervures prévues sur toute la hauteur de la préforme augmentent le poids de cette préforme et donc le poids de la pièce à parois minces obtenue à partir de cette préforme.

On connaît également le brevet européen EP 1 180 424 qui décrit un procédé de fabrication d'objets utilisant une étape de moulage par injection d'une préforme extérieure à partir d'une première résine, puis une étape de moulage par injection d'une préforme interne à l'intérieur de la première préforme, en utilisant une seconde résine. Le procédé comprend ensuite une étape de soufflage.

Le noyau du moule d'injection pour mouler la préforme interne comprend à sa périphérie extérieure, une pluralité de canaux verticaux disposés à des intervalles réguliers, de sorte que les surépaisseurs formées à l'intérieur de la préforme interne s'étendent sur tout le corps de la préforme. De telles surépaisseurs empêcheraient un rétrécissement de la bouteille formée au niveau des zones centrale et supérieure.

Là encore, les nervures prévues sur toute la hauteur de la préforme augmentent le poids de cette préforme et donc le poids de la pièce à parois minces obtenue à partir de cette préforme.

Enfin, le brevet US 4 649 068 décrit un procédé et une préforme pour réaliser par injection/soufflage des récipients fermés par un bouchon et destinés à recevoir des produits chauds. La préforme présente uniquement au niveau de la bague, des nervures longitudinales réparties uniformément sur son périmètre intérieur. Ces nervures permettent de renforcer axialement le filetage et empêchent la déformation de la bague sous la pression lorsque la bouteille est remplie d'un produit chaud.

## DESCRIPTION DE L'INVENTION

La présente invention a pour objectif l'obtention de pièces, notamment des préformes à parois minces et constitue une solution alternative aux solutions de l'art antérieur.

Plus particulièrement, la présente invention a pour objectif l'obtention de préformes permettant de diminuer au maximum le poids de la pièce à parois minces obtenue, telle qu'une bouteille, tout en maintenant ses propriétés mécaniques.

L'invention réside dans des principes techniques permettant de réaliser par moulage de matériaux thermoplastiques notamment des préformes présentant des parois minces. Ces principes techniques peuvent être utilisés séparément ou en association afin d'obtenir le résultat escompté.

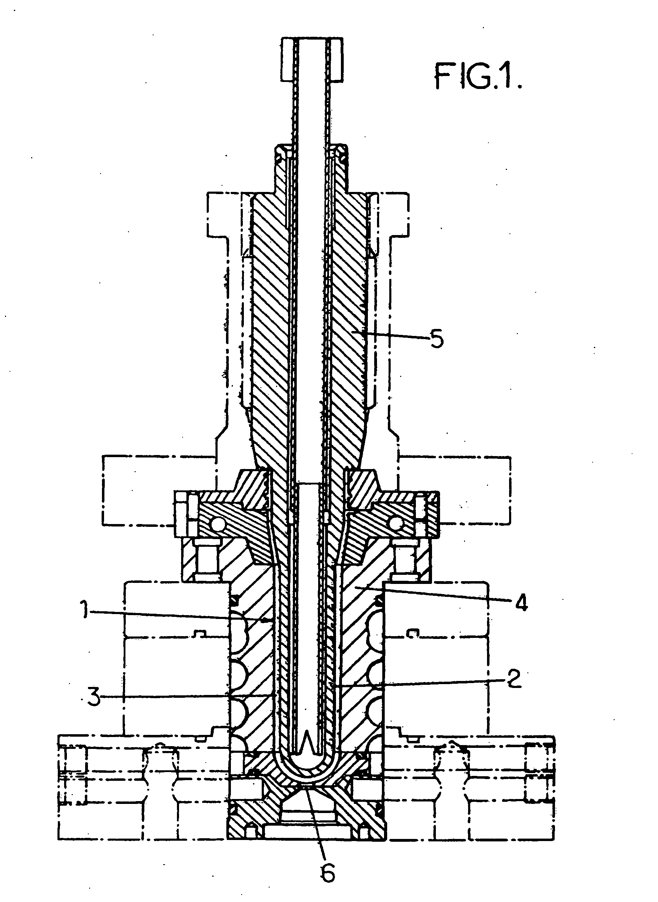

- Création de canaux d'écoulement préférentiels (CEP) dans le moule (Figure 1) permettant un remplissage de la cavité plus rapide et avec moins de baisse de température du matériau et de perte de charge.
- Par la création de zones de dépression par usinage à la surface du noyau qui permettent un écoulement préférentiel.
- Par la modification de l'état de surface du noyau et/ou de la cavité (traitement différentiel entre les zones d'écoulement préférentielles et les autres parties de la préforme).
- Utilisation de parties moulantes chauffantes permettant un meilleur écoulement de la matière et un moindre refroidissement pendant l'étape d'écoulement de la matière. Ces parties chauffantes doivent être chauffées et refroidies très rapidement en fonction de la phase en cours de l'étape de moulage.

Un des aspects de l'invention concerne un dispositif d'injection selon la revendication 1.

Les éventuels CEP secondaires sont discontinus, distincts des CEP principaux, et situés au niveau des zones de l'empreinte correspondant au fond et/ou au corps et/ou à la bague de la préforme.

Ainsi, selon l'invention, les CEP ne s'étendent pas sur toute la hauteur de la préforme, et en particulier ne sont pas obligatoirement présents au niveau du corps de la préforme.

Un tel dispositif permet de réaliser une préforme en réduisant au maximum l'épaisseur de la zone de transition de la préforme, alors que cette zone est soumise à des contraintes mécaniques importantes, par exemple lors de l'empilement des bouteilles. L'Homme du métier a donc vaincu un préjugé qui l'incitait à ne pas amincir la zone de transition, zone particulièrement sensible, pour ne pas risquer de diminuer la résistance de la bouteille aux contraintes mécaniques. Les CEP disposés selon l'invention au moment de l'injection permettent de réaliser l'opération de soufflage postérieure malgré une faible épaisseur au niveau de la zone de transition. Les CEP selon l'invention permettent d'obtenir une pièce à parois minces, par exemple une bouteille, allégée en poids, tout en maintenant ses propriétés mécaniques. La présente invention a également pour objet un noyau selon la revendication 6. comprend à sa surface éventuellement des zones de dépression secondaires discontinues, distinctes des zones de dépression principales, et situées sur la zone correspondant au fond et/ou au corps et/ou à la bague de la préforme.

L'invention concerne également une préforme à paroi mince selon la revendication 9. Elle comprend éventuellement des zones d'épaisseurs variables secondaires, discontinues, distinctes des zones d'épaisseurs variables principales, et situées sur son fond et/ou son corps et/ou sa bague.

Ainsi l'invention décrite dans la présente demande permet la production après soufflage de préformes de flacons légers tout en conservant des taux d'étirage globaux limités (taux d'étirage global : produit taux d'étirage longitudinal (lequel correspond au rapport longueur de l'objet final soufflé / longueur de la préforme) x taux d'étirage diamétral (lequel correspond au rapport diamètre de l'objet final soufflé sur diamètre de la préforme) et un allègement de préformes existantes : il est possible de produire plusieurs poids de préformes en changeant uniquement la partie centrale moulante (noyau). Ce changement du noyau présente également un avantage économique car dans la technique d'injection, les noyaux représentent seulement 10 à 15% du coût du moule. En faisant varier sur une plus grande amplitude l'épaisseur des préformes, il est donc possible de produire une plus large plage de poids de préformes en changeant uniquement les noyaux.

Selon un autre aspect encore, l'invention concerne un procédé d'injection de préformes à parois minces comprenant les étapes suivantes :

- le matériau fondu est injecté dans un moule comprenant un noyau tel que décrit ci-dessus,
- la préforme est refroidie à une température à laquelle la matière n'évolue plus,

- la préforme est ensuite démoulée,

selon la revendication 13.

Un tel procédé permet de réduire les temps de cycle de moulage sur des préformes minces et diminuer les risques de moulage incomplet, d'injecter des matières thermoplastiques très visqueuses, dans des moules conformés pour produire des préformes à parois minces.

Le terme "moule" utilisé dans le cadre de la présente invention se réfère à un dispositif bipartite comprenant un plateau fixe comportant les cavités ou contre moules dont le mouvement est assuré par le groupe de fermeture et une plaque support des noyaux. Le plateau fixe comporte également une vis de plastification où le matériau à injecter va passer de l'état solide à l'état fondu. L'injection du matériau fondu se fait au niveau du point d'injection après fermeture du moule d'injection et verrouillage.

Le terme "empreinte" utilisé dans le cadre de la présente invention se réfère à l'espace situé entre la paroi interne du contre moule et le noyau.

Selon un mode de réalisation particulier de l'invention, le moule est caractérisé en ce que l'épaisseur moyenne de l'empreinte est inférieure ou égale à a+L/b. Soit :

$$e_{moy} \leq a+L/b$$

avec $1,20<a<1,4$ et $88<b<98$

avec :

$$e_{moy} = \frac{1}{L}\int_{0}^{L} e_u * u * du \quad .$$

avec:

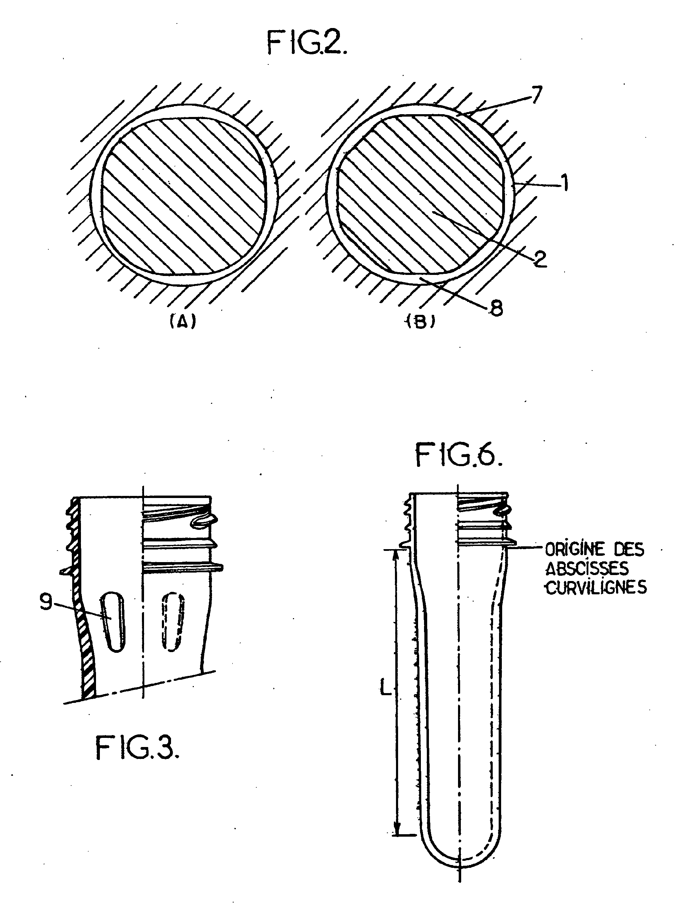

L : longueur totale considérée de la préforme (cf. Fig.6)
u : abscisse curviligne en chaque point de la préforme
$e_u$ : épaisseur locale en chaque point de la préforme

Le terme "canaux d'écoulement préférentiels ou CEP" utilisé dans le cadre de la présente invention se réfère à un volume compris entre la paroi interne du contre moule et les zones de dépression à la surface du noyau. Ils permettront un flux de matière fondue plus important par rapport aux zones extérieures aux CEP. Lorsque cela n'est pas précisé, le terme "CEP" désigne indifféremment les CEP principaux et les CEP secondaires.

Les CEP peuvent être obtenus par modification de l'état de surface ou par usinage du noyau.

Selon un mode préférentiel de réalisation de l'invention, les CEP sont symétriques.

Selon un mode encore plus préférentiel de réalisation de l'invention, les CEP sont symétriques et sont localisés de façon équiangulaire sur la circonférence de la préforme.

Le terme "équiangulaire" utilisé dans le cadre de la présente invention se réfère à des objets répartis selon un angle identique sur une circonférence.

Selon l'invention, les CEP principaux sont situés uniquement au niveau de la zone de l'empreinte correspondant à la zone de transition de la préforme.

Selon une mise en oeuvre particulière de l'invention, il est prévu des CEP secondaires, discontinus et distincts des CEP principaux, et qui peuvent être situés au niveau des zones de l'empreinte correspondant au fond et/ou au corps et/ou à la bague de la préforme.

Selon une autre mise en oeuvre particulière de l'invention le moule comporte un nombre de CEP compris entre 2 et 12, deux au moins étant prévus au niveau de la zone correspondant à la zone de transition de la préforme.

Dans un aspect tout à fait préférentiel de mise en oeuvre de l'invention, le moule comprend de 2 à 6 CEP, deux au moins étant prévus au niveau de la zone correspondant à la zone de transition de la préforme.

Selon une mise en oeuvre particulière de l'invention, le moule comporte des CEP qui, lorsqu'ils sont observés selon une coupe transversale sont de forme rectangulaire, polygonale, oblongue ou évolutive.

Selon un autre aspect de l'invention, le moule comprend des CEP dont l'orientation est longitudinale, hélicoïdale, et/ou évolutive.

Dans un autre mode de réalisation de l'invention, le moule comprend en outre au moins deux dépressions dans la surface interne de la cavité.

Le terme "préforme" utilisé dans le cadre de la présente invention est défini par trois zones différentes : le corps, la zone de transition et la bague. La préforme est obtenue par le comblement de l'empreinte par du matériau fondu injecté dans le moule.

Selon l'invention, la préforme comprend des zones d'épaisseurs variables principales situées uniquement sur sa zone de transition, et des zones d'épaisseurs variables secondaires, discontinues, distinctes des zones d'épaisseurs variables principales, et situées sur son fond et/ou son corps et/ou sa bague.

Selon un mode particulier de réalisation de l'invention, les zones d'épaisseurs variables sont symétriques.

Selon un mode encore plus préférentiel de réalisation de l'invention, les zones d'épaisseurs variables sont symétriques et réparties de façon équiangulaire sur la circonférence de la préforme.

Le terme "zone d'épaisseur variable" utilisé dans le cadre de la présente invention se réfère à un volume plus important de la préforme, correspondant à des CEP comblés par le matériau fondu et refroidi. Lorsque cela n'est pas précisé, le terme "zone d'épaisseur variable" désigne indifféremment les zones d'épaisseurs variables principales et les zones d'épaisseurs variables secondaires.

La préforme comporte une épaisseur moyenne ($e_{moy}$) définie par $e_{moy} \leq a+L/b$ avec $1,20<a<1,36$ et $88<b<98$, L étant la longueur totale considérée de la préforme, $e_{moy}$ étant calculé comme indiqué ci-dessus.

Selon un autre mode particulier de réalisation de l'invention, les zones d'épaisseurs variables de la préforme sont situées longitudinalement, hélicoïdalement ou de façon évolutive par rapport à l'axe de la préforme.

Un autre aspect de la présente invention concerne le noyau, lequel est utilisable pour l'injection de préformes à parois minces et comprend à sa surface des zones de dépression principales réalisées uniquement sur la zone correspondant à la zone de transition de la préforme, et éventuellement des zones de dépression secondaires discontinues, distinctes des zones de dépression principales, et situées sur la zone correspondant au fond et/ou au corps et/ou à la bague de la préforme.

Le terme "zone de dépression" utilisé dans le cadre de la présente invention se réfère à une zone dépressionnaire à la surface du noyau, laquelle peut être créée par usinage du noyau ou moulage complet du noyau. Lorsque cela n'est pas précisé, le terme "zone de dépression" désigne indifféremment les zones de dépression principales et les zones de dépression secondaires.

Selon un mode de réalisation particulier de la présente invention, les dépressions à la surface du noyau sont obtenues par usinage ou par traitement de surface, lesdites zones ainsi modifiées étant symétriques.

Selon un mode de réalisation préférentiel de l'invention, les zones de dépression à la surface du noyau sont symétriques et sont réparties de façon équiangulaire sur la circonférence du noyau.

Selon un autre aspect encore de la présente invention le noyau comporte 2 à 12 zones de dépression, et de façon tout à fait préférentielle il en comporte de 2 à 6, deux au moins étant prévues au niveau de la zone correspondant à la zone de transition de la préforme.

Selon un mode de réalisation de l'invention, les usinages réalisés sur le noyau peuvent être de forme rectangulaire, polygonale, oblongue ou évolutive par rapport à l'axe du noyau.

Dans le cadre de la présente invention, les usinages réalisés à à surface du noyau peuvent permettre de faire évoluer la forme de l'usinage créée afin que la forme soit le mieux adaptée au profil de la préforme, on dit alors que l'usinage a une forme "évolutive".

Un autre aspect de la présente invention concerne un procédé d'injection de préformes à parois minces comprenant les étapes suivantes : le matériau fondu est injecté dans un moule comprenant un noyau tel que décrit ci-dessus, la préforme est refroidie à une température à laquelle la matière n'évolue plus, la préforme est ensuite démoulée.

Dans un aspect préférentiel de l'invention, durant au moins une partie de l'étape d'injection du matériau fondu dans le moule, le noyau et/ou la cavité est chauffé.

De façon tout à fait préférentielle, le chauffage est effectué dans des zones spécifiques du noyau et/ou de la cavité.

La présente invention sera plus précisément décrite dans les mises en oeuvres distinctes données à titre exemplatif et non limitatif et illustrés par les figures suivantes :

## BREF DESCRIPTIF DES FIGURES

La figure 1 représente une coupe longitudinale selon un axe ne présentant pas les CEP d'un moule fermé selon l'invention.

La figure 2 (A et B) représente une autre coupe longitudinale d'un moule selon l'invention au niveau de la zone correspondant à la zone de transition de la préforme.

La figure 3 représente une coupe longitudinale partielle d'une préforme selon l'invention représentant la bague et la zone de transition.

La figure 4 représente une coupe longitudinale d'une autre variante de préforme selon l'invention.

La figure 5 représente une coupe transversale effectuée selon le plan AB de la préforme selon la figure 4.

La figure 6 présente les différents paramètres pris en compte pour le calcul de l'épaisseur minimum moyenne de la préforme selon l'invention.

## DESCRIPTION DETAILLEE DE L'INVENTION

En référence à la figure 1, il est représenté un moule selon l'invention comprenant deux parties : une partie fixe également appelée porte cavité ou contre moule 4 et une partie mobile 5 portant les noyaux 2. La paroi interne 1 du contre moule 4 et le noyau 2 définissent une cavité 3 dans laquelle le matériau fondu sera injecté par le point d'injection 6.

La figure 2 montre plus précisément la paroi interne 1 du contre moule 4 et le noyau 2 qui définissent une cavité 3 qui correspond à l'empreinte 7 et les CEP principaux 8.

Selon l'invention, les CEP principaux 8 (Figure 2 A et B) sont délimités par une zone de dépression à la surface du noyau 2, réalisée sur la zone correspondant à la zone de transition de la préforme, et la surface interne 1 du contre moule 4.

La figure 3 représente une première variante de l'invention, selon laquelle la préforme comporte des zones d'épaisseurs variables principales 9 situées uniquement sur sa zone de transition.

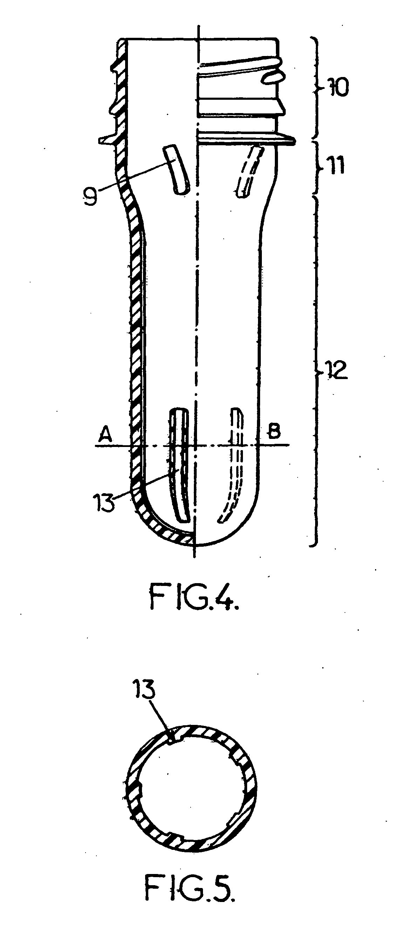

La figure 4 représente une seconde variante de l'invention. La préforme comprend une bague 10, une zone de transition 11 et un corps 12. Selon l'invention, la préforme comprend des zones d'épaisseurs variables principales 9 sur sa zone de transition 11, et des zones d'épaisseurs variables secondaires 13, discontinues, distinctes des zones d'épaisseurs variables principales 9, et situées sur la partie inférieure du corps 12.

Les zones d'épaisseurs variables secondaires 13 peuvent être observées sur la figure 5 en coupe transversale selon un plan AB de la figure 4.

Les exemples suivants, donnés à titre non limitatif, feront bien comprendre comment l'invention peut être mise en pratique et en fera ressortir les particularité

***Exemple 1*** *:* préforme conventionnelle en PET (17 g longueur 90,44 mm) et son procédé d'obtention.

Dispositif mis en oeuvre

Les préformes sont produites sur des presses à injecter équipées de moule multi-cavités.

La matière PET préalablement séchée pour éviter une hydrolyse lors de la fusion est transférée par gravité dans la vis de plastification où elle va passer progressivement de l'état solide à l'état fondu. Cette plastification doit être faite dans les règles de l'art pour avoir une bonne homogénéité du fondu. La matière fondue est transférée à l'avant de la vis par rotation de la vis, augmentation de la température et augmentation de pression : extrusion.

Il y a accumulation du matériau fondu à l'avant de la vis qui va être transféré dans le pot d'injection par passage de la vanne en position transfert, une quantité de matière correspondant à une moulée complète (nombre de cavités multiplié par le poids préforme en l'occurrence 17 g) est transféré. Après transfert de cette matière la vanne est positionnée en position injection.

La viscosité de la matière fondue va dépendre de la température, typiquement ces températures seront entre 230°C et 280°C, plus précisément 245°C - 270°C.

L'injection se fait après fermeture du moule d'injection et verrouillage, les forces de fermeture devant être suffisantes pour éviter les bavures sur les préformes mais pas trop élevées pour ne pas endommager les outils ; dans le cas d'un moule à 48 cavités, les forces mises en oeuvre sont comprises entre 200 et 300 tonnes, idéalement inférieures à 250 tonnes.

La matière fondue est introduite dans les cavités du moule après ouverture des obturateurs. Le bon remplissage va dépendre de l'écoulement soit du réglage des paramètres vitesse et pression d'injection et du moment de passage de la phase injection à la phase de maintien.

La gamme de pression utilisée sera inférieure à 150 bars et plus idéalement comprise entre 100 à 130 bars. Les vitesses de remplissage sont de 40 mm par seconde $\pm$ 20%.

La température des canaux chauds du moule, généralement comprise entre 270°C et 290°C va pouvoir plus ou moins fluidifier la matière donc améliorer l'écoulement ; cependant lune augmentation de celle-ci au-dessus de 290°C va générer des dégradations chimiques et des défauts de point d'injection non négligeables.

Au contact des parois froides du moule (cavité et noyau) la matière va se figer. La qualité de l'injection va dépendre de la quantité injectée par unité de temps ; avec les procédés d'injection actuels la vitesse d'injection est de 8 à 12 g par seconde en fonction des types de résines PET ; cette vitesse d'injection permet un bon remplissage de la cavité mais aussi de la bague. Afin de garantir cette vitesse d'injection il y a une épaisseur minimum de la préforme à respecter qui va dépendre de sa longueur. En l'espèce si $e_{moy}$ < 1,36 +L/93,76, il y a un risque de voir apparaître des bagues incomplètes, défaut qualité de critique.

Après remplissage de la cavité la matière est maintenue sous pression pendant un certain temps appelé temps de maintien, ceci afin de compenser le retrait dû au refroidissement de la matière.

L'ultime étape avant le démoulage de la préforme est son refroidissement, la matière doit être suffisamment solidifiée pour ne pas subir de déformation et doit être en dessous la température de cristallisation à cour.

Le temps de refroidissement sera une fonction de l'épaisseur de la préforme, il respecte la loi suivante :

$$tR = (e^2 / \pi^2 \cdot a) \ln \{(8 / \pi^2)(Ti - Tm) / (Td - Tm)]$$

Avec

tR = temps de refroidissement (en s),
- e = épaisseur (en mm),
- a = coefficient de diffusion thermique,
- Tm = température de surface de la cavité,
- Ti = température injection,
- Td = température moyenne de la préforme au démoulage.

*Exemple 2 :* Préforme selon l'invention (figure **3**).

L'allègement des emballages conduit à la conception de préformes de paroi de plus en plus minces dont le ratio épaisseur - longueur devient inférieur à 2, dans ce cas le design de la préforme inclura des CEP pour permettre le remplissage de la cavité. Le procédé de fabrication est identique à celui exposé ci-dessus.

L'allègement de la préforme se fait par le changement du noyau (investissement limité) ce qui réduit l'épaisseur de la préforme.

Ainsi pour une préforme de longueur identique à celle de l'exemple 1, à savoir 90,44 mm, une préforme allégée au poids de 15,35 g pourra être réalisée. L'épaisseur moyenne de cette préforme sera de 1,8 mm et le remplissage de cette préforme ne pourra se faire qu'en présence de CEP dans le moule.

L'ajout de CEP permettra de ramener la pression d'injection entre 100 et 130 bars par rapport à une pression maximum de 150 bars, pression maximum qui sans l'ajout de CEP ne garantit pas pour autant le remplissage de la cavité pour une épaisseur moyenne de 1,8 mm sans le risque d'avoir des bagues incomplètes. En l'espèce, pour une épaisseur moyenne de 1,8 mm et une longueur de 90,44 mm de la préforme, on vérifie bien que $e_{moy}$< a+L/b avec a = 1,36 et b = 93,76.

**Revendications**

1. Dispositif d'injection comprenant au moins un moule utilisable pour l'injection d'une préforme creuse à parois minces comprenant trois zones différentes : un corps (12), une zone de transition (11) et une bague (10), et susceptible d'être transformée en corps creux plus volumineux par soufflage, ledit moule comprenant

- un contre moule (4) définissant la surface interne (1) de la cavité (3),
- un noyau (2) situé dans la cavité (3) et espacé de ladite surface interne (1),
- une empreinte (7) de préforme située entre la surface interne (1) du contre moule (4) et le noyau (2), et qui recevra le matériau fondu,
- au moins deux canaux d'écoulement préférentiel principaux (8),
- éventuellement au moins deux canaux d'écoulement préférentiel secondaires, chaque canal d'écoulement préférentiel étant délimité d'une part par au moins une zone de dépression à la surface du noyau (2) et d'autre part par la surface interne (1) de la cavité (3);

ledit dispositif étant **caractérisé en ce que** les canaux d'écoulement préférentiel principaux (8) sont situés uniquement au niveau de la zone de l'empreinte (7) correspondant à la zone de transition (11) de la préforme.

**2.** Dispositif selon la revendication 1 **caractérisé en ce qu'**il comporte des canaux d'écoulement préférentiel secondaires discontinus, distincts des canaux d'écoulement préférentiel principaux (8), et situés au niveau des zones de l'empreinte (7) correspondant au fond et/ou au corps (12) et/ou à la bague (10) de la préforme.

**3.** Dispositif selon l'une quelconque des revendications 1 ou 2 **caractérisé en ce que** les canaux d'écoulement préférentiel sont symétriques et localisés de façon équiangulaire sur la circonférence de la cavité (3).

**4.** Dispositif selon l'une quelconque des revendications 1 à 3, **caractérisé en ce que** l'empreinte (7) est définie par une épaisseur moyenne ($e_{moy}$) $e_{moy} \leq a+L/b$, avec $1,20<a<1,40$ et $88<b<98$, L étant la longueur totale considérée de la préforme.

**5.** Dispositif selon l'une quelconque des revendications précédentes, **caractérisé en ce qu'**il comprend en outre au moins deux dépressions dans la surface interne (1) de la cavité (3).

**6.** Noyau (2) utilisable pour l'injection de préformes à parois minces, lesdites préformes comprenant trois zones différentes : un corps (12), une zone de transition (11) et une bague (10), **caractérisé en ce qu'**il comprend à sa surface des zones de dépression principales réalisées uniquement sur la zone correspondant à la zone de transition (11) de la préforme.

**7.** Noyau (2) selon la revendication 6 **caractérisé en ce qu'**il comprend des zones de dépression secondaires discontinues, distinctes des zones de dépression principales, et situées sur la zone correspondant au fond et/ou au corps (12) et/ou à la bague (10) de la préforme.

**8.** Noyau (2) selon l'une quelconque des revendications 6 ou 7, **caractérisé en ce que** les dépressions sont obtenues par usinage ou par traitement de surface, lesdites zones ainsi modifiées étant symétriques et réparties de façon équiangulaire sur la circonférence du noyau (2).

**9.** Préforme à paroi mince, comprenant trois zones différentes : un corps (12), une zone de transition (11) et une bague (10), **caractérisée en ce qu'**elle comprend des zones d'épaisseurs variables principales (9) situées uniquement sur sa zone de transition (11).

**10.** Préforme à paroi mince selon la revendication 9 **caractérisé en ce qu'**elle comprend des zones d'épaisseurs variables secondaires (13), discontinues, distinctes des zones d'épaisseurs variables principales (9), et situées sur son fond et/ou son corps (12) et/ou sa bague (10).

**11.** Préforme à paroi mince selon l'une quelconque des revendications 9 ou 10, **caractérisée en ce que** les zones d'épaisseurs variables (9, 13) sont symétriques et réparties de façon équiangulaire sur la circonférence de la préforme.

**12.** Préforme selon l'une quelconque des revendications 9 à 11, **caractérisée en ce que** son épaisseur moyenne ($e_{moy}$) est définie par $e_{moy} \leq a+L/b$ avec $1,20<a<1,36$ et $88<b<98$, L étant la longueur totale considérée de la préforme.

**13.** Procédé d'injection de préformes à parois minces comprenant trois zones différentes : un corps (12), une zone de transition (11) et une bague (10), ledit procédé comprenant au moins les étapes suivantes :

- le matériau fondu est injecté dans un moule comprenant un noyau (2),
- la préforme est refroidie à une température à laquelle la matière n'évolue plus,
- la préforme est ensuite démoulée

ledit procédé est **caractérisé en ce que** le matériau fondu est injecté dans un moule comprenant un noyau muni à sa surface de zones de dépression principales réalisées uniquement sur la zone correspondant à la zone de transition (11) de la préforme.

**14.** Procédé d'injection de préformes à parois minces selon la revendication 13, **caractérisé en ce que** le matériau fondu est injecté dans un moule comprenant un noyau muni à sa surface des zones de dépression secondaires discontinues, distinctes des zones de dépression principales, et situées sur la zone correspondant au fond et/ou au corps (12) et/ou à la bague (10) de la préforme.

**15.** Procédé d'injection/soufflage comprenant le procédé d'injection selon la revendication 14.

**Claims**

**1.** An injection molding device comprising at least one mold that can be used for the injection molding of a thin-walled hollow preform that can be converted into a more voluminous hollow body by blow molding, said mold comprising:

- a countermold (4) defining the internal surface (1) of the cavity (3);
- a core (2) located in the cavity (3) and spaced away from said internal surface (1);
- a preform impression (7) located between the internal surface (1) of the countermold (4) and the core (2), which impression will receive the molten material;
- at least two main preferential flow channels (8) ; and
- optionally at least two secondary preferential flow channels, each preferential flow channel being bounded, on the one hand, by at least one depression zone on the surface of the core (2) and, on the other hand, by the internal surface (1) of the cavity (3),

said device being **characterized in that** the main preferential flow channels (8) are located only **in that** zone of the impression (7) which corresponds to the transition zone (11) of the preform.

**2.** Device according to claim 1, **characterized in that** it comprises secondary preferential flow channels discontinuous, separate from the main preferential flow channels (8), and located in those zones of the impression (7) which correspond to the bottom and/or to the body (12) and/or to the neck (10) of the perform.

**3.** Device according to claim 1 or 2, **characterized in that** the preferential flow channels are symmetrical and localized equiangularly around the circumference of the cavity (3).

**4.** Device according to any one of claims 1 to 3, **characterized in that** the impression (7) is defined by an average thickness ($w_{av}$) where $w_{av} \leq a+L/b$, with $1.20 < a < 1.40$ and $88 < b < 98$, L being the total length in question of the preform.

**5.** Device according to any one of the preceding claims, **characterized in that** it further includes at least two depressions in the internal surface (1) of the cavity (3).

**6.** A core (2) that can be used for the injection molding of thin-walled preforms, said preforms including three different zones: a body (12), a transition zone (11) and a neck (10), **characterized in that** it includes, on the surface, main depression zones produced only in the zone corresponding to the transition zone (11) of the preform.

**7.** Core (2) according to claim 6, **characterized in that** it comprises discontinuous secondary depression zones, separate from the main depression zones and located in the zone corresponding to the bottom and/or to the body (12) and/or to the neck (10) of the preform.

**8.** Core (2) according to any claim 6 or 7, **characterized in that** the depressions are obtained by machining or by surface treatment, said zones thus modified being symmetrical and distributed equiangularly around the circumference of the core (2).

**9.** A thin-walled preform, including three different zones: a body (12), a transition zone (11) and a neck (10), **characterized in that** it comprises main variable-thickness zones (9) located only in its transition zone (11).

**10.** Thin-walled perform according to claim 9, **characterized in that** it comprises discontinuous secondary variable-thickness zones (13), separate from the main variable-thickness zones (9) and located on its bottom and/or its body (12) and/or its neck (10).

**11.** Thin-walled preform according to any claim 9 or 10, **characterized in that** the variable-thickness zones (9, 13) are symmetrical and distributed equiangularly over the circumference of the preform.

**12.** Preform according to any one of claims 9 to 11, **characterized in that** its average thickness ($w_{av}$) is defined by $w_{av} \leq a+L/b$, with $1.20 < a < 1.36$ and $88 < b < 98$, L being the total length in question of the preform.

13. A process for the injection molding of thin-walled preforms including three different zones: a body (12), a transition zone (11) and a neck (10), said processing comprising at least the following steps:

   - the molten material is injected into a mold comprising a core (2);
   - the preform is cooled down to a temperature at which the material no longer changes;
   - the preform is then demolded;

   said process is **characterized in that** the molten material is injected in a mold comprising a core including, on the surface, main depression zones produced only in the zone corresponding to the transition zone (11) of the preform.

14. Process for the injection molding of thin-walled preforms according to claim 13, **characterized in that** the molten material is injected in a mold comprising a core including, on the surface, discontinuous secondary depression zones, separate from the main depression zones and located in the zone corresponding to the bottom and/or to the body (12) and/or to the neck (10) of the preform.

15. An injection blow molding process that includes the injection molding process as claimed in claim 14.


**Patentansprüche**

1. Spritzvorrichtung, die mindestens ein Formwerkzeug enthält, das zum Spritzen einer hohlen dünnwandigen Vorform verwendbar ist, die drei unterschiedliche Zonen enthält: einen Körper (12), eine Übergangszone (11) und einen Ring (10), und die durch Blasen in einen voluminöseren Hohlkörper umgewandelt werden kann, wobei das Formwerkzeug enthält

   - ein Gegenformwerkzeug (4), das die Innenfläche (1) des Hohlraums (3) definiert,
   - einen Kern (2), der sich in dem Hohlraum (3) befindet und von der Innenfläche (1) entfernt ist,
   - einen Vorform-Formhohlraum (7), der sich zwischen der Innenfläche (1) des Gegen-Formwerkzeugs (4) und dem Kern (2) befindet und den geschmolzenen Werkstoff aufnimmt,
   - mindestens zwei Hauptkanäle (8) bevorzugter Fließrichtung,
   - ggf. mindestens zwei Sekundärkanäle bevorzugter Fließrichtung, wobei jeder Kanal bevorzugter Fließrichtung einerseits durch mindestens eine Vertiefungszone an der Oberfläche des Kerns (2) und andererseits durch die Innenfläche (1) des Hohlraums (3) begrenzt wird,

   wobei die Vorrichtung **dadurch gekennzeichnet ist, dass** die Hauptkanäle bevorzugter Fließrichtung (8) sich nur in Höhe der Zone des Formhohlraums (7) befinden, die der Übergangszone (11) der Vorform entspricht.

2. Vorrichtung nach Anspruch 1, **dadurch gekennzeichnet, dass** sie Sekundärkanäle bevorzugter Fließrichtung aufweist, die unterbrochen, sich von den Hauptkanälen bevorzugter Fließrichtung (8) unterscheiden und in Höhe der Zonen des Formhohlraums (7) angeordnet sind, die dem Boden und/oder dem Körper (12) und/oder dem Ring (10) der Vorform entsprechen.

3. Vorrichtung nach einem der Ansprüche 1 oder 2, **dadurch gekennzeichnet, dass** die Kanäle bevorzugter Fließrichtung symmetrisch und gleichwinklig auf dem Umfang des Hohlraums (3) angeordnet sind.

4. Vorrichtung nach einem der Ansprüche 1 bis 3, **dadurch gekennzeichnet, dass** der Formhohlraum (7) durch eine mittlere Dicke ($e_{moy}$) $e_{moy} \leq a + L/b$ mit $1,20 < a < 1,40$ und $88 < b < 98$ definiert wird, wobei L die betrachtete Gesamtlänge der Vorform ist.

5. Vorrichtung nach einem der vorhergehenden Ansprüche, **dadurch gekennzeichnet, dass** sie außerdem mindestens zwei Vertiefungen in der Innenfläche (1) des Hohlraums (3) enthält.

6. Kern (2), der zum Spritzen dünnwandiger Vorformen verwendbar ist, wobei die Vorformen drei unterschiedliche Zonen enthalten: einen Körper (12), eine Übergangszone (11) und einen Ring (10), **dadurch gekennzeichnet, dass** er an seiner Oberfläche Hauptvertiefungszonen enthält, die nur in der Zone ausgebildet sind, die der Übergangszone (11) der Vorform entspricht.

7. Kern (2) nach Anspruch 6, **dadurch gekennzeichnet, dass** er unterbrochene Sekundärvertiefungszonen enthält, die sich von den Hauptvertiefungszonen unterscheiden und sich in der Zone befinden, die dem Boden und/oder dem Körper (12) und/oder dem Ring (10) der Vorform entspricht.

8. Kern (2) nach einem der Ansprüche 6 oder 7, **dadurch gekennzeichnet, dass** die Vertiefungen durch maschinelle Bearbeitung oder durch Oberflächenbehandlung erhalten werden, wobei die so veränderten Zonen symmetrisch und gleichwinklig auf dem Umfang des Kerns (2) verteilt sind.

9. Dünnwandige Vorform, die drei unterschiedliche Zonen enthält: einen Körper (12), eine Übergangszone (11) und einen Ring (10), **dadurch gekennzeichnet, dass** sie Hauptzonen variabler Dicken (9) enthält, die sich nur in ihrer Übergangszone (11) befinden.

10. Dünnwandige Vorform nach Anspruch 9, **dadurch gekennzeichnet, dass** sie unterbrochene Sekundärzonen variabler Dicken (13) enthält, die sich von den Hauptzonen variablen Dicken (9) unterscheiden und sich an ihrem Boden und/oder ihrem Körper (12) und/oder ihrem Ring (10) befinden.

11. Dünnwandige Vorform nach einem der Ansprüche 9 oder 10, **dadurch gekennzeichnet, dass** die Zonen variabler Dicken (9, 13) symmetrisch und gleichwinklig auf dem Umfang der Vorform verteilt sind.

12. Vorform nach einem der Ansprüche 9 bis 11, **dadurch gekennzeichnet, dass** ihre mittlere Dicke ($e_{moy}$) durch $e_{moy} \leq a + L/b$ mit $1{,}20 < a < 1{,}36$ und $88 < b < 98$ definiert wird, wobei L die betrachtete Gesamtlänge der Vorform ist.

13. Verfahren zum Spritzen von dünnwandigen Vorformen, die drei unterschiedliche Zonen enthalten: einen Körper (12), eine Übergangszone (11) und einen Ring (10), wobei das Verfahren mindestens die folgenden Schritte enthält:

   - der geschmolzene Werkstoff wird in ein einen Kern (2) enthaltendes Formwerkzeug eingespritzt,
   - die Vorform wird auf eine Temperatur gekühlt, bei der der Stoff sich nicht mehr ändert,
   - die Vorform wird anschließend aus dem Formwerkzeug genommen,

   das Verfahren ist **dadurch gekennzeichnet, dass** der geschmolzene Werkstoff in ein Formwerkzeug gespritzt wird, das einen Kern enthält, der an seiner Oberfläche mit Hauptvertiefungszonen versehen ist, die nur in der Zone hergestellt sind, die der Übergangszone (11) der Vorform entspricht.

14. Verfahren zum Spritzen dünnwandiger Vorformen nach Anspruch 13, **dadurch gekennzeichnet, dass** der geschmolzene Werkstoff in ein Formwerkzeug gespritzt wird, das einen Kern enthält, der an seiner Oberfläche mit unterbrochenen Sekundärvertiefungszonen versehen ist, die sich von den Hauptvertiefungszonen unterscheiden und sich in der Zone befinden, die dem Boden und/oder dem Körper (12) und/oder dem Ring (10) der Vorform entspricht.

15. Spritzblasverfahren, das das Spritzverfahren nach Anspruch 14 enthält.

FIG.1.

# FIG.2.

(A)

(B)

# FIG.6.

# FIG.3.

ORIGINE DES
ABSCISSES
CURVILIGNES

L

FIG.4.

FIG.5.

**EP 1 998 945 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9713696 A
- JP 11090975 A
- EP 1180424 A
- US 4649068 A